(19) Europäisches Patentamt
European Patent Office
Office européen des brevets

(11) **EP 2 367 272 B1**

(12) **EUROPÄISCHE PATENTSCHRIFT**

(45) Veröffentlichungstag und Bekanntmachung des Hinweises auf die Patenterteilung:
**27.06.2018   Patentblatt 2018/26**

(51) Int Cl.:
*H02M 1/12* *(2006.01)*          *H02M 7/538* *(2007.01)*

(21) Anmeldenummer: **11155686.6**

(22) Anmeldetag: **23.02.2011**

(54) **Wechselrichter**

Inverter

Onduleur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2010   DE 102010009265**

(43) Veröffentlichungstag der Anmeldung:
**21.09.2011   Patentblatt 2011/38**

(73) Patentinhaber: **Kostal Industrie Elektrik GmbH 58513 Lüdenscheid (DE)**

(72) Erfinder: **Bartling, Ralf 58730 Fröndenberg (DE)**

(74) Vertreter: **Kerkmann, Detlef Leopold Kostal GmbH & Co. KG An der Bellmerei 10 58513 Lüdenscheid (DE)**

(56) Entgegenhaltungen:
**EP-A1- 0 682 401      EP-A2- 0 899 859
EP-A2- 2 001 111      WO-A2-99/49559**

**Beschreibung**

Die Erfindung betrifft einen Wechselrichter, der einen Gleichspannungseingang für mindestens eine Gleichspannungsquelle aufweist, und der eine dreiphasige Brückenschaltung aufweist, deren ausgangsseitige Phasenleiter mit einem dreiphasigen Wechselspannungsnetz verbindbar sind, wobei der Wechselrichter keine Verbindung zum Neutralleiter des Wechselspannungsnetzes herstellt, wobei mit den Phasenleitern jeweils ein Kondensator verbunden ist, und die Kondensatoren einen gemeinsamen Verknüpfungspunkt aufweisen, und wobei der Zwischenkreis des Wechselrichters mit einer seriellen Anordnung von Symmetrierkondensatoren verbunden ist, die über einen Dämpfungswiderstand mit dem Verknüpfungspunkt verbunden ist.

Ein dreiphasiger Wechselrichter ist in der europäischen Patentanmeldung EP 2 107 672 A1 beschrieben. Dieses Dokument erläutert insbesondere, dass ein Wechselrichter ohne Anbindung an einen Neutralleiter mit einer geringeren Zwischenkreisspannung arbeiten kann, wodurch die Spannungsbelastung der Leistungshalbleiter verringert und deren Wirkungsgrad erhöht werden kann.

Solche Wechselrichter werden verwendet, um beispielsweise durch eine Photovoltaik- oder eine Windkraftanlage generierte elektrische Energie in das öffentliche Netz eines Energieversorgers einzuspeisen. Ein derartiger Wechselrichter erzeugt eine dreiphasige Wechselspannung, die ohne Verbindung zum Neutralleiter in das öffentliche Stromnetz eingespeist werden kann.

Bei dreiphasiger Einspeisung ohne Neutralleiter kommt es an den Anschlüssen der Gleichspannungsquelle ohne zusätzliche Maßnahmen zu taktfrequenten Spannungshüben gegen das Potential des Schutzleiters (PE-Leiter, "protective earth"). Diese Spannungshübe haben aufgrund von Ableitkapazitäten Ableitströme gegen den Schutzleiter zur Folge, die relativ hohe Werte annehmen können und die nicht akzeptabel sind, da sie den Betrieb der Anlage stören und zum Auslösen von Fehlerstromschutzschaltern führen können.

Aus der europäischen Patentanmeldung EP 0 899 859 A2 ist ein gattungsgemäßer Wechselrichter bekannt, bei dem der Zwischenkreis mit einer seriellen Anordnung von Symmetrierkondensatoren verbunden ist, die über den Dämpfungswiderstand eines RC-Gliedes mit dem Verknüpfungspunkt verbunden ist. Die durch die Symmetrierkondensatoren fließenden Ströme werden so über den Dämpfungswiderstand auf ein virtuelles Neutralleiterpotential am Verknüpfungspunkt abgeleitet und dämpfen dadurch die taktfrequenten Spannungshübe an der Gleichspannungsquelle.

Es stellte sich die Aufgabe, einen gattungsgemäßen Wechselrichter, mit einer verbesserter Ausgangsstromregelung zu schaffen.

Diese Aufgabe wird erfindungsgemäß dadurch gelöst, dass der Wechselrichter einen Mikrocontroller aufweist, der die Brückenschaltung steuert, und dass der Mikrocontroller die Ausgangsströme des Wechselrichters regelt und die Symmetrierspannung an einem der Symmetrierkondensatoren messtechnisch erfasst und eine ideelle Symmetrierspannung berechnet, und die Differenz der Symmetrierspannung und der ideellen Symmetriespannung als Vorsteuergröße für die Stromregelung verwendet.

Der Wechselrichter weist somit einen Mikrocontroller auf, der die Spannung an einem Symmetrierkondensator erfasst, die erfasste Spannung als Eingangsgröße in einem internen Regelkreis verwendet, durch den die Ansteuerung der Leistungshalbleiter der Brückenschaltung beeinflusst wird. Hierdurch können im Zusammenwirken mit den Dämpfungseigenschaften des Dämpfungswiderstands taktfrequente Spannungshübe besonders effizient ausgeregelt werden. Aus der Differenz der gemessenen Spannung und der berechneten Spannung gewinnt der Mikrocontroller zudem eine Hilfsgröße, die vorteilhaft in die Regelung der Ausgangsströme einfließt.

Der Erfindung wird nachfolgend anhand der Zeichnung näher erläutert. Es zeigen:

Figur 1      eine Schaltskizze eines erfindungsgemäßen Wechselrichters,
Figur 2      ein Plot diverser Spannungen,
Figur 3      eine Ausschnittsvergrößerung aus der Figur 2,
Figur 4      ein erstes Ersatzschaltbild des erfindungsgemäßen Wechselrichters,
Figur 5      eine Schaltskizze eines Wechselrichters nach dem Stand der Technik,
Figur 6      Spannungsplots zum Wechselrichter gemäß der Figur 5,
Figur 7      eine Ausschnittsvergrößerung aus der Figur 6,
Figur 8      eine Schaltskizze eines weiteren Wechselrichters nach dem Stand der Technik,
Figur 9      ein zweites Ersatzschaltbild des erfindungsgemäßen Wechselrichters,
Figur 10     ein drittes Ersatzschaltbild des erfindungsgemäßen Wechselrichters,
Figur 11     eine Regelstrecke des erfindungsgemäßen Wechselrichters.

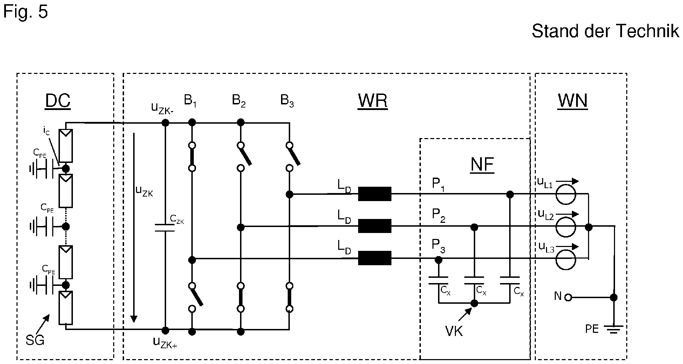

Zunächst soll das zur Erfindung führende Problem anhand der Zeichnung näher erläutert werden. Hierzu skizziert die Figur 5 in stark vereinfachender Weise funktionswesentliche Komponenten eines Wechselrichters WR nach dem Stand der Technik.

Der Wechselrichter WR weist eine dreiphasige Brückenschaltung auf, die aus drei Brückenzweigen $B_1$, $B_2$, $B_3$

besteht. Die dargestellten Schaltersymbole stehen vereinfachend für steuerbare Leistungshalbleiter, die über nicht dargestellte Schaltungskomponenten gesteuert werden.

Mit den Brückenzweigen $B_1$, $B_2$, $B_3$ ist jeweils eine Glättungsinduktivität $L_D$ verbunden, deren Ausgangleitungen die drei Phasenleiter $P_1$, $P_2$, $P_3$ des Wechselrichters WR bilden, welche mit den drei Phasen eines Wechselspannungsnetzes WN verbindbar sind. Eine Anbindung des Wechselrichters WR an den Neutralleiter N des Wechselspannungsnetzes WN besteht nicht.

Mit den Phasenleitern $P_1$, $P_2$, $P_3$ ist jeweils ein Kondensator $C_X$ verschaltet. Die freien Anschlüsse der Kondensatoren $C_X$, die nachfolgend auch als X-Kondensatoren bezeichnet werden, sind an einem gemeinsamen Verknüpfungspunkt VK miteinander verbunden. Die X-Kondensatoren $C_X$ bilden zusammen ein Netzfilter NF aus, welches die Einspeisung von Störsignalen in das Wechselspannungsnetz WN verhindert.

Am Eingang des Wechselrichters WR ist eine Gleichspannungsquelle DC angeschlossen, die eine so genannte Zwischenkreisspannung $u_{ZK}$ einspeist. Als Energiespeicher ist ein Zwischenkreiskondensator $C_{ZK}$ vorgesehen. Die Gleichspannungsquelle DC ist hier beispielhaft ein Solargenerator SG, der aus einer Reihenschaltung von mehreren Solarmodulen (Panels) besteht. Den Verbindungsstellen der Module kann jeweils eine Ableitkapazität $C_{PE}$ gegen das Potential des Schutzleiters PE zugeordnet werden.

Durch die Schaltvorgänge der Leistungshalbleiter in den Brückenzweigen $B_1$, $B_2$, $B_3$ kommt es zu Spannungsänderungen an den Modulen des Solargenerators SG, wodurch Ableitströme $i_C$ durch die Ableitkapazitäten $C_{PE}$ entstehen. Für diese Ableitströme $i_C$ gilt allgemein:

$$i_C = C_{PE} \frac{du_{C_{PE}}}{dt}$$

Die Spannungssteilheit beim Wechsel von einem Schaltzustand in den nächsten kann im Bereich von $10 \, kV/\mu s$ liegen. Wenn der Differentialquotient einen derart hohen Wert aufweist, dann verursachen bereits kleinste Ableitkapazitäten $C_{PE}$ signifikante Ableitströme $i_C$, die den Betrieb der Anlage stören und zum Auslösen von Fehlerstromschutzschaltern führen können.

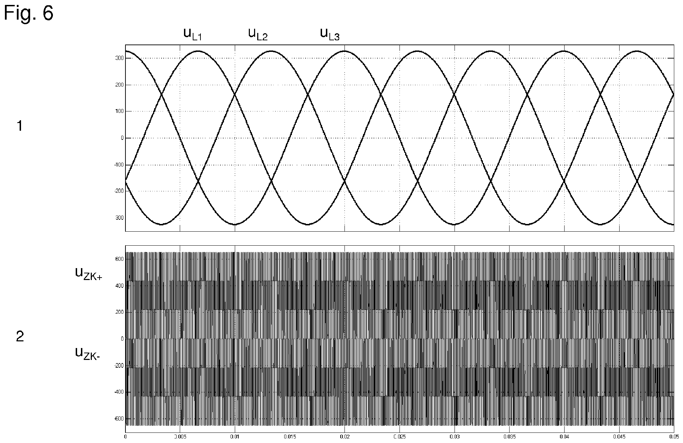

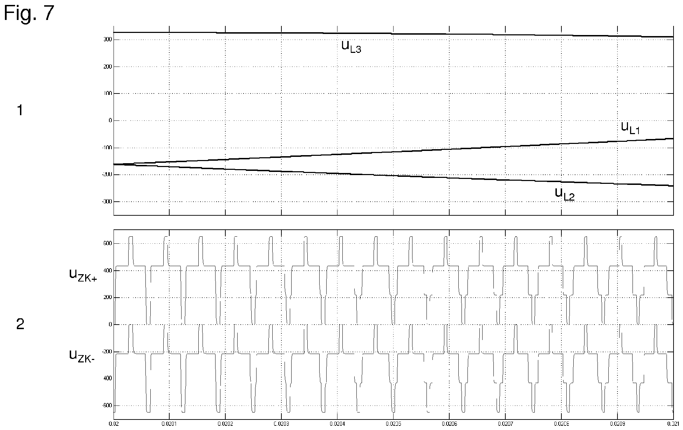

Die Figur 6 zeigt in einem ersten Simulationsplot 1 den Verlauf der Netzspannungen $u_{L1}$, $u_{L2}$, $u_{L3}$ über einen Zeitraum von 50 ms. Plot 2 zeigt für den gleichen Zeitraum die zugehörigen Zwischenkreispotentiale $u_{ZK+}$, $u_{ZK-}$ wie sie sich ohne zusätzliche Maßnahmen gegen das Potential des Schutzleiters PE einstellen. Die Figur 7 bildet diese Signale in einer zeitgespreizten Vergrößerung im Zeitraum von t = 20 ms bis t = 21 ms ab. In der Figur 7, Plot 2 sind die taktfrequenten Spannungshübe der Zwischenkreispotentiale $u_{ZK+}$, $u_{ZK-}$ deutlich als einzelne Peaks zu erkennen.

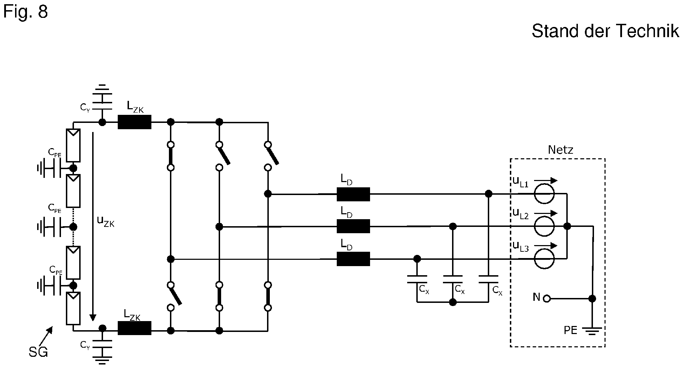

Ein möglicher Weg zur Unterdrückung derartiger Spannungshübe auf den Zwischenkreispotentialen $u_{ZK+}$, $u_{ZK-}$ ist der Einsatz von Filterdrosseln $L_{ZK}$, die in Reihe zum Solargenerator SG geschaltet werden. Das Ziel ist, dass die hochfrequenten Spannungsflanken an den Filterdrosseln $L_{ZK}$ abfallen. Die Verwendung solcher Filterdrosseln $L_{ZK}$ ist in der Figur 8 skizziert.

Der Einsatz der Filterdrosseln $L_{ZK}$, besonders in Verbindung mit gegen das Schutzleiterpotential geschalteten Ableitkondensatoren $C_Y$, ist eine sehr wirkungsvolle Maßnahme. Der größte Nachteil dieser Anordnung besteht in den hohen Kosten der Filterdrosseln $L_{ZK}$, weil diese für den vollen Strom des Solargenerators SG auszulegen sind. Darüber hinaus verursachen die Filterdrosseln $L_{ZK}$ noch Verluste, die den Gesamtwirkungsgrad der Anlage senken. Je nach Auslegung der Ableitkondensatoren Cy ist auch noch mit zusätzlichen Ableitströmen zu rechnen.

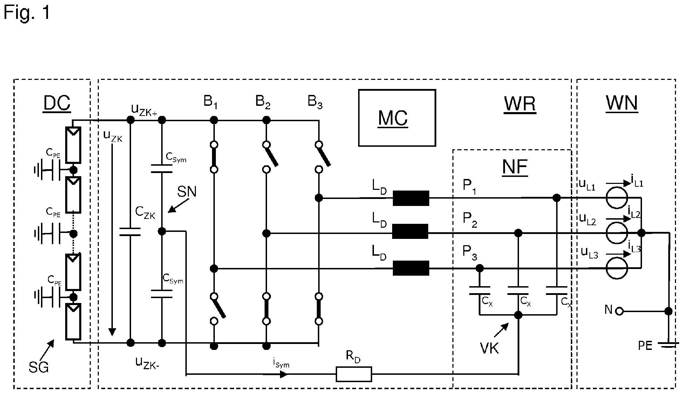

Zur Beseitigung dieser Nachteile ist erfindungsgemäß ein kapazitives Symmetriernetzwerk SN vorgesehen, welches Bestandteil der in der Figur 1 dargestellten Schaltungsanordnung ist. Mit den Leitungen des Zwischenkreises sind, außer dem Zwischenkreiskondensator $C_{ZK}$, zwei in Reihe geschaltete Kondensatoren $C_{Sym}$ verbunden, die im folgenden auch als Symmetrierkondensatoren bezeichnet werden, und die nachfolgend, ohne Beschränkung der Allgemeinheit, als gleich dimensioniert angenommen werden. Die Symmetrierkondensatoren $C_{Sym}$ weisen dabei im allgemeinen deutlich geringere Kapazitätswerte auf als der Zwischenkreiskondensator $C_{ZK}$.

Der Mittelpunkt des durch die Symmetrierkondensatoren $C_{Sym}$ gebildeten kapazitiven Spannungsteilers stützt sich über einen Dämpfungswiderstand $R_D$ auf einem von den X-Kondensatoren Cx gebildeten virtuellen Neutralleiterpotential ab. Die daraus im Symmetriernetzwerk SN resultierenden Ströme werden so über den Dämpfungswiderstand $R_D$ auf das virtuelle Neutralleiterpotential am Verknüpfungspunkt VK abgeleitet, wodurch die taktfrequenten Spannungshübe am Solargenerator SG wirksam unterdrückt werden. Neben der Ausbildung eines virtuellen Neutralleiterpotentials wirken die X-Kondensatoren Cx auch hier vorteilhafterweise zugleich als Netzfilter NF.

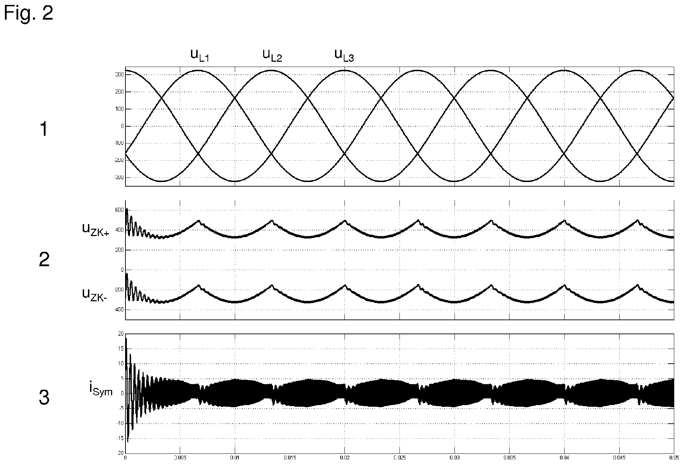

Die Figur 2 zeigt in einem Simulationsplot 1 wiederum den Verlauf der Netzspannungen $u_{L1}$, $u_{L2}$, $u_{L3}$. Im Plot 2 sind die Zwischenkreispotentiale $u_{ZK+}$, $u_{ZK-}$, gemessen gegen das Potential des Schutzleiters PE dargestellt. Alle taktfrequenten Spannungshübe werden hier von den Symmetrierkondensatoren $C_{Sym}$ herausgefiltert. Es verbleibt lediglich eine 150 Hz-Komponente, die sich durch die dreiphasige Einspeisung und durch das Schaltmuster des Wechselrichters WR ergibt. Die erkennbare, relativ geringe Restwelligkeit der Zwischenkreispotentiale $u_{ZK+}$, $u_{ZK-}$ ist für den normalen Betrieb akzeptabel.

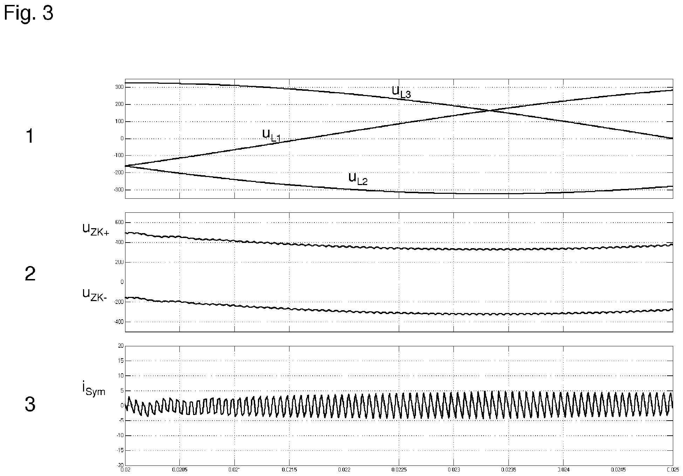

Zur Verdeutlichung zeigt die Figur 3 wiederum zeitvergrößerte Ausschnitte aus den Abbildungen der Figur 2. Im Plot 3 der Figur 3 ist der Umladestrom $i_{Sym}$ des Symmetriernetzwerkes zu erkennen. Dieser Umladestrom $i_{Sym}$ fließt in den von den X-Kondensatoren gebildeten Verknüpfungspunkt VK ab. Dieser Punkt bildet ein virtuelles Neutralleiterpotential und weist damit ungefähr das Potential des Schutzleiters PE auf.

Zu erkennen ist, dass die Rückkopplung der Symmetrierkondensatoren $C_{Sym}$ auf den virtuellen Neutralleiter am Verknüpfungspunkt VK zu einem schwingfähigen System mit einer Dämpfung führt. Am Beginn der Plots 2 und 3 der Figur 2 ist jeweils der gedämpfte Einschwingvorgang zu erkennen.

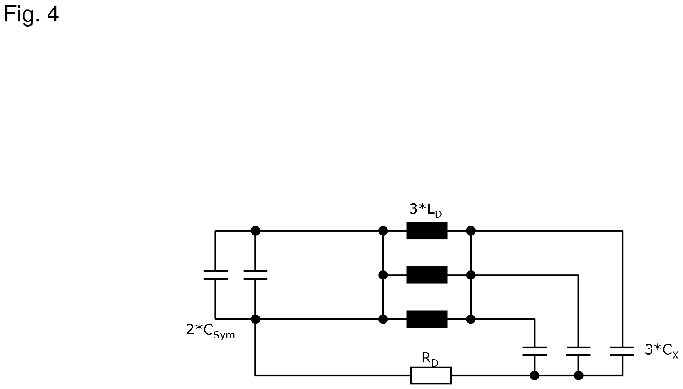

Das in der Figur 4 dargestellte Wechselspannungsersatzschaltbild zeigt den durch den Schaltungsaufbau der Figur 1 gebildeten Reihenschwingkreis. Die Resonanzfrequenz f dieses Systems lässt sich gemäß der allgemeinen Schwingungsgleichung berechnen:

$$f = \frac{1}{2\pi \sqrt{\dfrac{L_D}{3} \dfrac{2C_{Sym}\, 3C_X}{2C_{Sym} + 3C_X}}}$$

Die Resonanzfrequenz f kann durch die Dimensionierung der Bauteile ($C_{Sym}$, $C_X$, $L_D$) so gelegt werden, dass das System weder netzseitig noch von den Schalthandlungen des Wechselrichters WR angeregt wird. Typische Resonanzfrequenzen liegen dann beispielsweise im Bereich von 2 bis 3 kHz.

Dämpfend wirkt in diesem System lediglich der ohmsche Widerstand der Glättungsinduktivitäten $L_D$ und der ohmsche Dämpfungswiderstand $R_D$. Eine Vergrößerung des Dämpfungswiderstand $R_D$ führt zu einer besseren Dämpfung, allerdings stellt sich im normalen Betrieb des Gerätes eine stationäre Verlustleistung ein:

$$P_{R_D} = \frac{R_D}{T} \int\limits_{(T)} i_{Sym}^2\, dt$$

Typische Werte für den Dämpfungswiderstand $R_D$ liegen im Bereich von 500 m$\Omega$ bis 1 $\Omega$. Hier ist ein Kompromiss zwischen Verlustleistung und Dämpfungsverhalten zu finden.

Der große Vorteil der vorgeschlagenen kapazitiven Symmetrierung sind die geringen Kosten im Vergleich zur induktiven Unterdrückung der Schaltflanken durch Filterdrosseln $L_{ZK}$, wie anhand der Figur 8 erläutert. Darüber hinaus werden die Symmetrierströme $i_{Sym}$ nicht gegen den Schutzleiter PE, sondern in das von den X-Kondensatoren $C_X$ gebildeten virtuelle Neutralleiterpotential abgeleitet. Die X-Kondensatoren $C_X$ sind oftmals bereits ein Teil eines bestehenden Netzfilters zur Beseitigung von elektromagnetischen Störsignalen und verursachen in diesen Fällen keinen zusätzlichen Aufwand.

Der Umladestrom $i_{Sym}$ hängt nicht von dem in das Wechselspannungsnetz WN einzuspeisenden Strom ab, sondern vom Spannungshub an den Glättungsinduktivitäten $L_D$, sowie von der Zwischenkreisspannung $u_{ZK}$. Durch den Einsatz von Folienkondensatoren im Zwischenkreis und im Eingang des Wechselspannungsnetzes WN treten in den Kondensatoren $C_{Sym}$, $C_X$ keine nennenswerten Verlustleistungen auf. Lediglich bei der Dimensionierung des Dämpfungswiderstands $R_D$ ist die entstehende Verlustleistung zu beachten.

Zur Steuerung der steuerbaren Leistungsschalter in den Brückenzweigen $B_1$, $B_2$, $B_3$ ist ein Mikrocontroller MC vorgesehen. Es ist vorausgesetzt, dass der Mikrocontroller MC durch nicht dargestellte Messvorrichtungen Spannungswerte an verschiedenen Schaltungspunkten des Wechselrichters WR erfassen kann.

Bei einem kapazitiven Symmetriernetzwerkes SN, wie es in der Figur 1 dargestellt ist, kann es, wie bereits erwähnt, zu Schwingungen des gesamten Zwischenkreises gegenüber dem Schutzleiterpotential PE kommen. Diese Schwingungen bilden sich dann direkt in den Ausgangsströmen $i_{L1}$, $i_{L2}$, $i_{L3}$ des Wechselrichters WR ab, da die Dynamik einer einfachen Stromregelung nicht zur Ausregelung ausreicht.

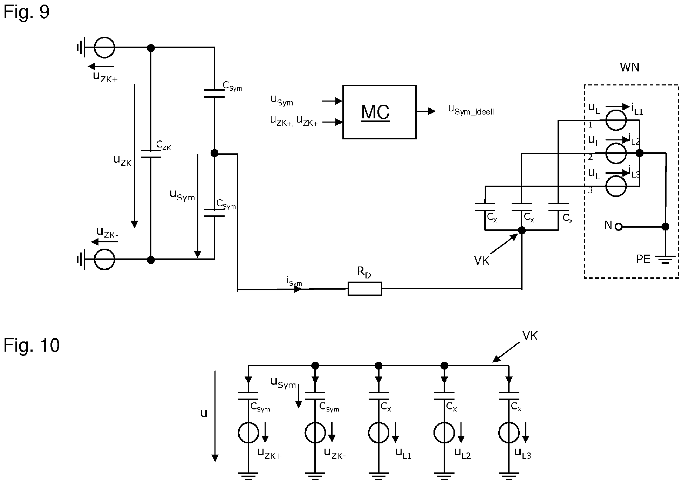

Um diese Schwingungen regelungstechnisch zu bedämpfen, wird nun die Spannung $u_{Sym}$ eines Symmetrierkondensators $C_{Sym}$ vom Mikrocontroller MC mit erfasst. Parallel dazu wird im Mikrocontroller MC eine ideelle Symmetrierspannung $u_{Sym\_ideell}$ berechnet. Für die Berechnung werden die Zwischenkreispotentiale $u_{ZK+}$, $u_{ZK-}$ gegenüber dem Potential des Schutzleiters PE benötigt, die ebenfalls vom Mikrocontroller MC ermittelt werden. Zur Erläuterung der Berechnung dieser ideellen Symmetrierspannung $u_{Sym\_ideell}$ soll nun von einem vereinfachten Schaltbild ausgegangen werden, das in der Figur 9 dargestellt ist.

Zeichnet man dieses Schaltbild gemäß der Darstellung der Figur 10 um, dann können die Gleichungen für die Berechnung der ideellen Symmetrierspannung $u_{Sym\_ideell}$ direkt aufgestellt werden. Der Dämpfungswiderstand $R_D$ wird hier vernachlässigt, weil die Berechnung sonst auf ein Differentialgleichungssystem führen würde, in dem auch die zeitliche Verläufe aller Spannungen zu berücksichtigen wären. Da der Dämpfungswiderstand $R_D$ im Bereich einiger hundert Milliohm ausgeführt wird, ist diese Vereinfachung zulässig. Signifikante Spannungsabfälle sind hier nicht zu erwarten.

Im ersten Schritt wird als Hilfsgröße die Spannung u am Verknüpfungspunkt VK berechnet. Dazu werden die Spannungen $u_{L1}$, $u_{L2}$, $u_{L3}$, $u_{zk-}$, $u_{ZK+}$ an den X-Kondensatoren $C_X$ und an den Symmetrierkondensatoren $C_{Sym}$ benötigt.

$$u_{Sym} = u - u_{ZK+} \quad u_{Sym} = u - u_{ZK-} \quad u_{Cx} = u - u_{L1} \quad u_{Cx} = u - u_{L2} \quad u_{Cx} = u - u_{L3}$$

Da die Summe aller Ströme im oberen Knotenpunkt Null ist, lässt sich mithilfe der allgemeinen Differentialgleichung eines Kondensators die folgende Gleichung aufstellen:

$$C_{Sym} \frac{d(u - u_{ZK+})}{dt} + C_{Sym} \frac{d(u - u_{ZK-})}{dt} + C_X \frac{d(u - u_{L1})}{dt} + C_X \frac{d(u - u_{L2})}{dt} + C_X \frac{d(u - u_{L3})}{dt} = 0$$

Nach unbestimmter Integration lassen sich die Terme sortieren und u daraus berechnen.

$$u(2C_{Sym} + 3C_X) - C_{Sym}(u_{ZK+} + u_{ZK-}) - C_X(u_{L1} + u_{L2} + u_{L3}) = 0$$

$$u = \frac{C_{Sym}(u_{ZK+} + u_{ZK-}) + C_X(u_{L1} + u_{L2} + u_{L3})}{2C_{Sym} + 3C_X}$$

Aus der oberen Gleichung lässt sich nun die ideelle Symmetrierspannung $u_{Sym\_ideell}$ direkt bestimmen.

$$u_{Sym\_ideell} = \frac{C_{Sym}(u_{ZK+} + u_{ZK-}) + C_X(u_{L1} + u_{L2} + u_{L3})}{2C_{Sym} + 3C_X} - u_{ZK-}$$

Da bei der Berechnung der Zwischenkreispotentiale $u_{ZK+}$ und $u_{ZK-}$ bereits ein symmetrisches Netz ($u_{L1} + u_{L2} + u_{L3}$ = 0) vorausgesetzt worden ist, kann diese Randbedingung auch hier angewendet werden. Damit kann die Gleichung wie folgt vereinfacht werden.

$$u_{Sym\_ideell} = \frac{C_{Sym}}{2C_{Sym} + 3C_X} u_{ZK+} - \frac{C_{Sym} + 3C_X}{2C_{Sym} + 3C_X} u_{ZK-}$$

Diese Gleichung ist im Mikrocontroller MC implementiert. Die Differenz der Spannungen $u_{Sym}$ und $u_{Sym\_ideell}$ kann nun als Vorsteuergröße für die Stromregelung verwendet werden.

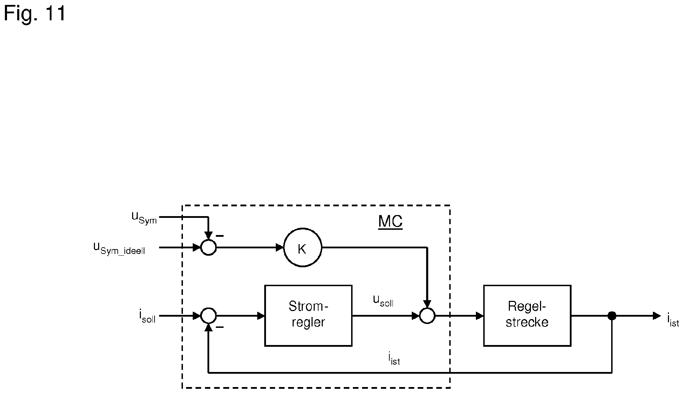

Die Figur 11 zeigt abstrakt den Eingriff der Differenz von $u_{Sym}$ und $u_{Sym\_ideell}$ auf die Stellgröße des Stromreglers. Die Regelgrößen $i_{ist}$, $i_{soll}$, stehen hier für die Ist- und Sollwerte der Ausgangsströme $i_{L1}$, $i_{L2}$, $i_{L3}$ des Wechselrichters WR. Durch das Schwingen der Zwischenkreispotentiale $u_{ZK+}$, $u_{ZK-}$ um die ideellen Werte werden diese verzerrt. Aus der Differenz der gemessenen Spannung $u_{Sym}$ und der berechneten Spannung $u_{Sym\_ideell}$ gewinnt der Mikrocontroller MC eine Hilfsgröße, die in die Regelung der Ausgangsströme $i_{L1}$, $i_{L2}$, $i_{L3}$ einfließt. Damit lassen sich die Verzerrungen nahezu vollständig kompensieren bzw. deutlich verkleinern. Über den frei wählbaren Faktor K lässt sich der Einfluss der Vorsteuerung gemäß den Anforderungen des Regelkreises frei bestimmen.

**Bezugszeichen**

B$_1$, B$_2$, B$_3$     Brückenzweige
BZ           Bezugspotential

| | | |
|---|---|---|
| $C_{PE}$ | | Ableitkapazität |
| $C_{Sym}$ | | Symmetrierkondensatoren |
| $C_X$ | | Kondensatoren (X-Kondensatoren) |
| $C_Y$ | | Ableitkondensatoren |
| $C_{ZK}$ | | Zwischenkreiskondensator |
| DC | | Gleichspannungsquelle |
| $L_D$ | | Glättungsinduktivitäten |
| $L_{ZK}$ | | Filterdrosseln |
| MC | | Mikrocontroller |
| N | | Neutralleiter |
| NF | | Netzfilter |
| $P_1, P_2, P_3$ | | Phasenleiter |
| PE | | Schutzleiter |
| $R_D$ | | Dämpfungswiderstand |
| SG | | Solargenerator |
| SN | | Symmetriernetzwerk |
| VK | | Verknüpfungspunkt |
| WN | | Wechselspannungsnetz |
| WR | | Wechselrichter |

| | |
|---|---|
| u | Spannung am Verknüpfungspunkt VK (Hilfsgröße) |
| $u_{L1}, u_{L2}, u_{L3}$ | Spannung der Phasenleiter $P_1, P_2, P_3$ gegen den Neutralleiter (Netzspannungen) |
| $U_{Sym}$ | Symmetrierspannung |
| $U_{Sym\_ideell}$ | ideelle Symmetrierspannung (berechnet) |
| $u_{ZK}$ | Zwischenkreisspannung |
| $u_{ZK+}, u_{ZK-}$ | Zwischenkreispotentiale |
| $i_C$ | Ableitströme |
| $i_{ist}, i_{soll}$ | Regelgrößen |
| $i_{L1}, i_{L2}, i_{L3}$ | Ausgangsströme |
| $i_{Sym}$ | Umladestrom (Symmetriestrom) |

**Patentansprüche**

**1.** Wechselrichter, der einen Gleichspannungseingang für mindestens eine Gleichspannungsquelle aufweist, und der eine dreiphasige Brückenschaltung aufweist, deren ausgangsseitige Phasenleiter mit einem dreiphasigen Wechselspannungsnetz verbindbar sind, wobei der Wechselrichter keine Verbindung zum Neutralleiter des Wechselspannungsnetzes herstellt oder aufweist, wobei mit den Phasenleitern jeweils ein Kondensator verbunden ist, und die Kondensatoren einen gemeinsamen Verknüpfungspunkt aufweisen, und

wobei der Zwischenkreis des Wechselrichters (WR) mit einer seriellen Anordnung von Symmetrierkondensatoren ($C_{Sym}$) verbunden ist, die über einen Dämpfungswiderstand (RD) mit dem Verknüpfungspunkt (VK) verbunden ist, **dadurch gekennzeichnet,**
**dass** der Wechselrichter einen Mikrocontroller (MC) aufweist, der die Brückenschaltung steuert, und
**dass** der Mikrocontroller (MC) die Ausgangsströme ($i_{L1}, i_{L2}, i_{L3}$) des Wechselrichters (WR) regelt und die Symmetrierspannung ($u_{sym}$) an einem der Symmetrierkondensatoren ($C_{Sym}$) messtechnisch erfasst und eine ideelle Symmetrierspannung ($u_{sym\_deell}$) berechnet, und die Differenz der Symmetrierspannung ($u_{sym}$) und der ideellen Symmetriespannung ($u_{sym\_ideell}$) als Vorsteuergröße für die Stromregelung verwendet.

**2.** Wechselrichter nach Anspruch 1, **dadurch gekennzeichnet, dass** die mit den Phasenleitern ($P_1, P_2, P_3$) verbundenen Kondensatoren ($C_X$) ein Netzfilter (NF) ausbilden.

**3.** Wechselrichter nach Anspruch 1, **dadurch gekennzeichnet, dass** die Wechselrichter (WR) Bestandteil einer Photovoltaikanlage ist.

**Claims**

**1.** Inverter having a DC voltage input for at least one DC voltage source and having a three-phase bridge circuit whose phase conductors on the output side can be connected to a three-phase AC voltage grid, whereby the inverter does not establish or possess any connection to the neutral conductor of the AC voltage grid,

whereby a capacitor is connected to each of the phase conductors with the capacitors having a common connection point, and

whereby the intermediate circuit of the inverter (WR) is connected to a serial array of symmetrising capacitors ($C_{Sym}$) which is connected via a damping resistor (RD) to the connection point (VK),

**characterised in that**

the inverter has a microcontroller (MC) which controls the bridge circuit, and

that the microcontroller (MC) controls the output currents ($i_{L1}$, $i_{L2}$, $i_{L3}$) of the inverter (WR) and metrologically records the symmetrising voltage ($U_{sym}$) to one of the symmetrising capacitors (Csym) and calculates an ideal symmetrising voltage ($U_{sym\_ideal}$), and utilises the difference between the symmetrising voltage ($U_{sym}$) and the ideal symmetrising voltage ($U_{sym\_ideal}$) as a preliminary control variable for regulating the current.

**2.** Inverter according to Claim 1, **characterised in that** the capacitors (Cx) that are connected to the phase conductors ($P_1$, $P_2$, $P_3$) form a mains filter (NF).

**3.** Inverter according to Claim 1, **characterised in that** the inverter (WR) is an element of a photovoltaic system.

## Revendications

**1.** Onduleur qui comprend au moins une entrée de tension continue pour au moins une source de tension continue et qui comprend un circuit en pont triphasé, dont les conducteurs de phase, côté sortie, peuvent être mis en liaison avec un réseau de tension alternative triphasé, sachant que l'onduleur n'établit ni ne possède une liaison au conducteur neutre du réseau de tension alternative,

sachant qu'à chacun des conducteurs de phase est relié un condensateur, et que les condensateurs présentent un point de liaison commun, et

sachant que le circuit intermédiaire de l'onduleur (WR) est relié à un agencement sériel de condensateurs symétriques ($C_{Sym}$), qui peut être relié au point de liaison (VK) par l'intermédiaire d'une résistance d'amortissement (RD) ;

**caractérisé en ce que**

l'onduleur présente un microcontrôleur (MC), qui commande le circuit en pont, et

que le microcontrôleur (MC) règle les courants de sortie ($i_{L1}$, $i_{L2}$, $i_{L3}$) de l'onduleur (WR) et saisit la tension de symétrie ($U_{sym}$) sur l'un des condensateurs de symétrie ($C_{Sym}$) selon une technique de mesure, et calcule une tension de symétrie idéelle ($U_{sym\_ideell}$) et utilise la différence entre la tension de symétrie ($U_{sym}$) et la tension de symétrie idéelle ($U_{sym\,ideell}$) en tant que grandeur de précommande pour la régulation du courant.

**2.** Onduleur selon la revendication 1, **caractérisé en ce que** les condensateurs (CX), reliés aux conducteurs de phase (P1, P2, P3) forment un filtre de réseau (NF).

**3.** Onduleur selon la revendication 1, **caractérisé en ce que** l'onduleur (WR) fait partie d'une installation photovoltaïque.

Fig. 1

Fig. 2

Fig. 3

Fig. 4

Fig. 5

Stand der Technik

Fig. 6

Fig. 7

Fig. 8

Stand der Technik

Fig. 9

Fig. 10

Fig. 11

**EP 2 367 272 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2107672 A1

- EP 0899859 A2